**Europäisches Patentamt**

**European Patent Office**

**Office européen des brevets**

(11) Publication number : **0 134 231 B2**

(12) **NEW EUROPEAN PATENT SPECIFICATION**

(45) Date of publication of the new patent specification : **26.05.93 Bulletin 93/21**

(21) Application number : **84900651.5**

(22) Date of filing : **25.01.84**

(86) International application number : **PCT/SE84/00023**

(87) International publication number : **WO 84/02961 02.08.84 Gazette 84/18**

(51) Int. Cl.⁵ : **F16B 13/14**

(54) **FIXING ELEMENT FOR KNOCKING INTO A DRILLED HOLE.**

(30) Priority : **27.01.83 SE 8300423**

(43) Date of publication of application :
**20.03.85 Bulletin 85/12**

(45) Publication of the grant of the patent :
**11.01.89 Bulletin 89/02**

(45) Mention of the opposition decision :
**26.05.93 Bulletin 93/21**

(84) Designated Contracting States :
**AT BE CH DE FR GB LI NL**

(56) References cited :
**DE-A- 2 607 338**
**DE-C- 889 516**

(56) References cited :
**FR-A- 2 106 078**
**SE-B- 351 014**
**SE-B- 360 439**
**US-A- 1 499 071**
**Luegers Lexikon der gesamten Technik, Vol. 5, 1928, page 472**

(73) Proprietor : **TELEFONAKTIEBOLAGET L M ERICSSON**
**Patent and Trademark Department**
**S-126 25 Stockholm (SE)**

(72) Inventor : **LINDELL, Jan Anders**
**Rosendal**
**S-610 50 Jönaker (SE)**

(74) Representative : **Johansson, Lars-Erik et al**
**Patech S.A. Le Haut-des-Champs**
**CH-1173 Féchy (CH)**

EP 0 134 231 B2

## Description

Technical field

The present invention relates to a fixing element of the kind disclosed in the preamble to claim 1. as known from DE-A-2607 338.

Background art

In such fixing elements for knocking into predrilled holes it has been attempted to achieve great resistance to withdrawal by supplying the expandable portion with a large amount of material which, since the outside diameter is determined with respect to the hole diameter, has only been able to be arranged by reducing the extension of the nail hole in the expandable portion or by heavily reducing its diameter within this portion. Further to this it has been in many cases attempted to increase the resistance to withdrawal by forming cutouts of different shapes at right angles to the longitudinal axis and on the exterior surface of the expandable portion, these being expected to form claw-like engagement means which will grip into the wall of the hole when the plug expands.

Fastening elements intended for knocking in, of the type described here, are intended to replace fastening means of the type plug+screw, with the object of reducing the time and input of work in different kinds of installation or erection where plugging is necessary. However, it has been found that in many types of such erection or installation, fastening elements of the type plug+screw are still preferred, since these give greater resistance to withdrawal.

Disclosure of invention

The object of the present invention is to provide a fastening element with the aid of which it is possible to achieve values for withdrawal resistance which correspond to those achieved with a screw+plug fastening of high quality.

This object has been achieved by a plug characterized in that the inner surface of said hole in the expandable portion is provided with four internal longitudinal ridges and the exterior surface of the expandable portion is provided with a plurality of longitudinal grooves, which together with the ridges are formed such that the expandable portion has a substantially constant cross-sectional area along the greater portion of its length, the sum of the cross-sectional areas of the expandable portion and the steel nail being substantially equal to or fall to a minor extent below the cross-sectional area of a pre-drilled hole of nominal diameter.

The US-A-1 499 071 shows a bolt anchor of a ductile metal, preferably lead, with four internal ridges and four external grooves which bolt anchor has a certain likeness in appearance to the present invention. However, this bolt anchor is intended to be useable in combination with a great number of screw sizes in spite of the fact that the bolt anchor in an one size bolt anchor. The main purpose of the bolt anchor design has thus been to create the possibility for screws of different sizes to cut their own threads in the internal ridges of the one size bolt anchor. It is only when the largest size screws are used that the material of the bolt anchor is redistributed and the grooves of the bolt anchor will be more of less filled up by the metal of the anchor. As screws of different diameters, lengths and forms are used the degree of expansion will vary quite a lot and as nails are not used the problems with axial expansion have not been taken into consideration when giving final shape to this anchor.

With the present invention these problems have been solved and a uniform expansion is achieved along practically the whole of the expandable portion. There is also obtained large contact surface and large contact pressure against the wall of the hole because the sum of the cross-sectional areas of the expandable portion and the steel nail are substantially equal or fall to minor extent below the cross-sectional area of a pre-drilled hole of nominal diameter.

This relationship between said areas may be denoted as the filling factor of the fastening element, and the following relationship applies to it:

$$\frac{\text{Nail area} + \text{plug area}}{\text{Hole area}} = \text{filling factor,}$$

the plug area relating to the expansion zone. For filling factors equal to, or less than 1, only a radial redistribution of the plastics in the expansion zone takes place, and thereby radial filling-out of the cavities between plug and hole wall. To acheive the greatest possible withdrawal value, the filling factor must be close to 1 along the entire length of the expandable portion.

If the filling factor should exceed 1, an axial expansion occurs when the nail is driven in, i.e. material is pressed in front of the nail towards the end of the plug. When the nail is in movement during driving-in, the radial expansion does not have time to develop to its fullest extent, and poor withdrawal values are obtained as a result. Added to this, large forces are required to overcome the inner resistance of the plastics, and the plug may be damaged when the nail is driven in.

Description of figures

The invention will now be described with reference to the accompanying drawing, on which

Figure 1 is a side view of a device in accordance with the invention, including nail and plug, the latter in longitudinal section,

Figure 2 are side and end views of the plug,

Figure 3 is a cross section along the line III-III in Figure 2 and
Figure 4 is a cross section along the line IV-IV in
Figure 2.

## Preferred embodiment

The device in accordance with the invention consists of a plug 1 with a coacting nail or the like 2 adjusted to the length of the plug. The plug comprises an expandable portion 3 provided with a diametral slit 8, the portion 3 extending from the inner end 4 of the plug and to an unexpandable portion 5, which may have different lengths depending on the field of use of the plug. At the outer end of the plug the portion 5 merges into a collar 6 in which there is the mouth of a hole 7 suited to the nail, and this hole tapers towards the inner end 4 of the plug in the expandable portion 3, which is provided with four internal, longitudinal ridges 9. Corresponding to these ridges 9 there are four grooves 10 arranged in the cylindrical outer surface of the expandable portion.

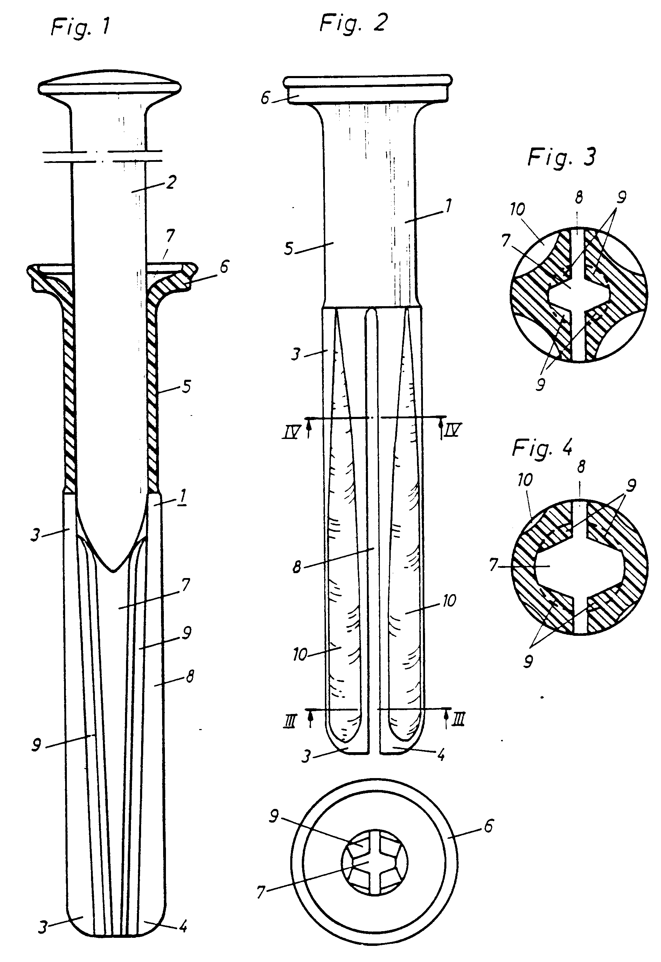

The increase in the cross-sectional area of the expandable portion, which occurs in a direction towards the inner end 4 of the plug, as a result of the taper of the hole 7, is compensated by the grooves at the inner end 4 of the plug having greater width and depth, which is illustrated by Figures 3 and 4, showing two different cross-sections of the expandable portion 3.

By keeping the cross-sectional area constant, and, together with the nail area, in correspondence with the hole area, i.e. with the filling factor 1, the material in the expandable portion of the plug will be redistributed and will assume an annular appearance when the plug is placed in a hole and the nail is driven in. There is thus achieved a large contact surface against the hole wall as well as high pressure on the contact surface, and thereby maximum reistance to withdrawal.

The forces in withdrawal stresses will be taken up by the head of the nail. In order to transmit larger forces between the expanded portion of the plug and the nail, the latter can be provided with a shallow, claw-like rolled thread over the portion coacting with the expandable portion of the plug. Screwing the nail out and removing the plug is thus enabled. The thread is formed such that it does not retard driving in the nail.

## Claims

1. Fixing element for knocking into a pre-drilled hole in concrete or the like material in so-called straight-through fixing for fastening wall panels, studs etc., said fixing element consisting of a plug (1) with a nail (2) or the like expansion means coacting therewith, said plug preferably being manufactured in a rigid plastic material and including an expandable portion (3) extending from the inner end (4) of the plug in a fixed condition and preferably provided with a diametral slit (8), said portion (3) merging into a non-expandable zone (5) terminating at the outer end of the plug in a collar (6), the plug being formed with a central hole (7) starting from the end provided with the collar (6), the hole being adapted to the nail (2) and preferably tapering conically towards the inner end of the plug (4) in the expandable portion (3), **characterised in that** the inner surface of said hole in the expandable portion (3) is provided with four internal longitudinal ridges (9), the exterior surface of the expandable portion being provided with a plurality of longitudinal grooves (10) which together with the ridges (9) are formed such that the expandable portion has a substantially constant cross-sectional area along the greater portion of its length and the sum of the cross-sectional areas of the expandable portion (3) and the steel nail (2) being substantially equal to the cross-sectional area of the pre-drilled hole of nominal diameter.

## Patentansprüche

1. Befestigungselement zum Einschlagen in ein vorgebohrtes Loch in Beton oder ähnlichem Material bei einer sogenannten durchgehenden Befestigung zur Befestigung von Wandtafeln, Bolzen, etc., wobei das Befestigungselement aus einem Dübel (1) mit einem Nagel (2) oder einer ähnlichen, mit dem Dübel zusammenwirkenden Erweiterungsvorrichtung besteht, der Dübel vorzugsweise aus einem starren Kunststoffwerkstoff hergestellt ist und einen erweiterbaren Abschnitt (3) umfaßt, der sich vom inneren Ende (4) des Dübels, bezogen auf dessen befestigten Zustand, wegerstreckt und vorzugsweise mit einem diametralen Schlitz (8) versehen ist, wobei der erweiterbare Abschnitt (3) in eine nicht erweiterbare Zone (5) übergeht, die am äußeren Ende der Dübels in einen Kragen (6) mündet, der Dübel ausgehend von dem mit dem Kragen (6) versehenen Ende mit einem mittigen Loch (7) versehen ist, das Loch an den Nagel (2) angepaßt ist und sich vorzugsweise gegen das innere Ende des Dübels (4) in dem erweiterbaren Abschnitt (3) hin konisch verjüngt, dadurch **gekennzeichnet**, daß die Innenoberfläche des Loches in dem erweiterbaren Abschnitt mit vier inneren Längsstegen (9) versehen ist, die Außenoberfläche des erweiterbaren Abschnitts mit mehreren Längsnuten (10) versehen ist, die zusammen mit den Längsstegen (9) derart ausgebildet sind, daß der erweiterbare Abschnitt eine im wesentlichen konstante Querschnittsfläche längs des größeren Abschnittes seiner Länge aufweist, und die Summe der Querschnittsflächen des erweiterbaren Abschnittes (3) und des Stahlnagels (2) im wesentlichen gleich groß wie die Querschnittsfläche des vorgebohrten Loches mit Solldurchmesser ist.

**Revendications**

1. Elément de fixation à insérer dans un trou préalablement foré dans un béton ou une matière analogue lors d'une fixation dite directe pour fixer des panneaux de murs, des goujons, etc., ledit élément de fixation étant constitué d'une cheville (1) et d'un clou (2) ou d'un moyen d'expansion analogue coopérant avec elle, ladite cheville étant de préférence réalisée en une matière plastique rigide et comprenant une partie expansible (3) s'étendant à partir de l'extrémité intérieure (4) de la cheville dans un état fixé et présentant avantageusement une fente diamétrale (8), ladite partie (3) se prolongeant dans une zone non expansible (5) qui se termine à l'extrémité extérieure de la cheville en une collerette (6), la cheville présentant un trou central (7) partant de l'extrémité comportant la collerette (6), le trou étant adapté au clou (2) et se resserrant avantageusement de façon conique vers l'extrémité intérieure de la cheville (4) dans la partie expansible (3), caractérisé en ce que la surface intérieure dudit trou dans la partie expansible (3) comporte quatre nervures longitudinales intérieures (9), la surface extérieure de la partie expansible présentant plusieurs gorges longitudinales (10) qui sont formées de manière que, avec les nervures (9), la partie expansible présente une section transversale sensiblement constante sur la plus grande partie de sa longueur, la somme des sections transversales de la partie expansible (3) et du clou (2) d'acier étant sensiblement égale à la section transversale d'un trou préalablement foré, de diamètre nominal.

Fig. 1

Fig. 2

Fig. 3

Fig. 4